# EUROPÄISCHE PATENTANMELDUNG

(11) **EP 4 432 440 A1**
(43) Veröffentlichungstag der Anmeldung: **18.09.2024**
(21) Anmeldenummer: 23161932.1
(22) Anmeldetag: 14.03.2023
(51) Int. Cl.: H01M 50/238, H01M 50/289, H01M 10/6557, H01M 50/209, H01M 50/242

(54) **BATTERIEANORDNUNG**

(71) Anmelder: Cellforce Group GmbH, 72072 Tübingen (DE)
(72) Erfinder: Gräf, Jürgen, 72072 Tübingen (DE); Lampa, Christian, 72072 Tübingen (DE)

(57) **Zusammenfassung**

Die Erfindung betrifft eine Batterieanordnung, aufweisend ein Zellgehäuse einer Batteriezelle, aufweisend mindestens zwei Zellstapel, welche in dem Zellgehäuse angeordnet sind, und aufweisend mindestens eine Puffereinheit, wobei mindestens zwei Zellstapel innerhalb des Zellgehäuses durch die Puffereinheit voneinander beabstandet sind. Weiterhin betrifft die Erfindung eine Puffereinheit sowie eine Batteriezelle.

## Beschreibung

Die Erfindung betrifft eine Batterieanordnung, aufweisend ein Zellgehäuse einer Batteriezelle, und aufweisend mindestens zwei Zellstapel, welche in dem Zellgehäuse angeordnet sind. Weiterhin betrifft die Erfindung eine Puffereinheit sowie eine Batteriezelle.

Im Bereich von Lithium-Ionen-Batterien können die Zellstapel, welche in einem Zellgehäuse der Batterie angeordnet sind, anschwellen und somit unerwünschte mechanische Verspannungen des Zellgehäuses verursachen. Insbesondere erfolgt bedingt durch Alterungsprozesse eine reguläre Volumenzunahme des Zellstapels, sodass eine initiale Vergrößerung des Zellgehäuses erforderlich sein kann. Eine derartige Vergrößerung des Zellgehäuses führt jedoch dazu, dass der Zellstapel nicht mehr ortsfest im Zellgehäuse verpresst ist und bei mechanischer Beanspruchung, beispielsweise im automobilen Bereich oder Luftfahrtbereich, innerhalb des Zellgehäuses schwingen bzw. sich bewegen kann. Eine derartige Bewegung des Zellstapels kann die Zellverbinder, welche die Aktivmaterialien elektrisch mit den Batteriepolen verbinden, beschädigen. Darüber hinaus können Zuleitungen zu Berstmembranen durch ungünstig positionierte Zellstapel versperrt werden, sodass bei einem Überdruck das Abführen von gasförmigen Komponenten erschwert oder verhindert wird.

Es sind bereits Verfahren bekannt, welche mehrere Batteriezellen zu einem Batteriemodul zusammenfügen und diese gemeinsam verpressen. Eine derartige Maßnahme erfordert jedoch einen zusätzlichen Montageaufwand, insbesondere weil die Batteriezellen federnd verpresst sein müssen, um eine Volumenzunahme zu ermöglichen.

Die vorliegende Erfindung hat daher die Aufgabe, eine Batterieanordnung zu schaffen, die eine vorgegebene Position der Zellstapel innerhalb des Zellgehäuses sicherstellen und eine Volumenzunahme von Zellstapeln innerhalb eines Zellgehäuses kompensieren kann. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine Batterieanordnung bereitgestellt. Die Batterieanordnung weist ein Zellgehäuse bzw. ein Batteriezellengehäuse einer Batteriezelle auf. In einem Innenvolumen des Zellgehäuses sind mindestens zwei Zellstapel angeordnet. Die Zellstapel können beispielsweise aus einer Vielzahl von Anodenschichten, Kathodenschichten und Separatorschichten bestehen, die aufgerollt oder gestapelt angeordnet sind. Die jeweiligen Anodenschichten, Kathodenschichten und Separatorschichten können einander abwechselnd vorgesehen sein und integral miteinander verbunden sein, um einen Zellstapel auszubilden. Insbesondere können die Zellstapel dazu eingerichtet sein, eine Batteriezelle basierend auf einer Lithium-Ionen-Technologie auszubilden.

Je nach Ausgestaltung der Batteriezelle können zwei oder mehr Zellstapel entlang einer Breitenrichtung der Batteriezelle nebeneinander im Innenvolumen des Zellgehäuses positioniert sein. Das Zellgehäuse kann mit einer Elektrolytlösung gefüllt sein.

Die Batterieanordnung weist weiterhin mindestens eine Puffereinheit auf. Die mindestens zwei Zellstapel sind durch die Puffereinheit voneinander beabstandet. Beispielsweise können zwei Zellstapel entlang der Breitenrichtung durch die Puffereinheit beabstandet sein.

Die Puffereinheit kann dazu eingerichtet sein, eine Volumenausdehnung der Zellstapel aufgrund von Alterungseffekten zu kompensieren und kann somit komprimierbar ausgestaltet sein. Vorteilhafterweise kann die Puffereinheit vollständig oder lediglich bereichsweise komprimierbar ausgestaltet sein, um eine präzise Kompensation einer Volumenzunahme der Zellstapel entgegenzuwirken.

Aufgrund der Verwendung der Puffereinheit im Innenvolumen des Zellgehäuses zwischen zwei Zellstapeln kann zwar ein größeres Zellgehäuse genutzt werden, jedoch kann die Puffereinheit einen Formschluss und/oder einen Kraftschluss der Zellstapel innerhalb des Zellgehäuses ermöglichen, wodurch unkontrollierte Bewegungen der Zellstapel im Innenvolumen des Zellgehäuses unterbunden werden.

Die Batteriezelle der Batterieanordnung kann auch mehr als zwei Zellstapel aufweisen. Bei einer derartigen Ausgestaltung kann beispielsweise zwischen allen Zellstapeln eine Puffereinheit eingesetzt werden. Alternativ kann bei Batteriezellen mit mehr als zwei Zellstapeln eine Puffereinheit vorgesehen sein, welche die Volumenzunahme von mehreren in Reihe angeordneten Zellstapeln kompensieren kann.

Die Volumenveränderung der Zellstapel kann besonders optimal ausgeglichen werden, wenn die mindestens eine Puffereinheit zumindest entlang einer Breitenrichtung der Batteriezelle zumindest bereichsweise komprimierbar ausgestaltet ist. Hierzu können die Zellstapel vorteilhafterweise entlang der Breitenrichtung aneinander gereiht bzw. nebeneinander angeordnet sein.

Ein Ausgleich einer möglichen Volumenveränderung der Zellstapel entlang einer Höhenrichtung kann durch entsprechende Ausgleichsräume bzw. Toleranzen im Innenvolumen des Zellgehäuses realisiert werden.

Gemäß einem weiteren Ausführungsbeispiel ist die mindestens eine Puffereinheit elastisch, insbesondere elastisch federnd, zwischen den mindestens zwei Zellstapeln verpresst angeordnet. Durch die Verwendung eines elastischen Materials kann die Puffereinheit in einer durch die Zellstapel zusammengepressten Form in das Zellgehäuse eingesetzt werden. Hierdurch übt die mindestens eine Puffereinheit kontinuierlich eine Federkraft auf die Zellstapel aus, welche somit außenseitig gegen gegenüberliegende Wandungen des Zellgehäuses gepresst werden. Die Wandungen des Zellgehäuses, welche die Zellstapel berühren können hierfür eine Beschichtung und/oder Perforierung und/oder eine Struktur aufweisen, um eine besonders robuste Positionierung der Zellstapel innerhalb des Zellgehäuses zu ermöglichen.

Die Zellstapel können durch die mindestens eine Puffereinheit besonders präzise und sicher in ihrer Position innerhalb des Zellgehäuses gehalten werden, wenn die Puffereinheit mindestens einen randseitigen Abstandshalter aufweist, welcher dazu eingerichtet ist, einen Abstand entlang mindestens einer Raumrichtung, insbesondere einer Höhenrichtung, zwischen mindestens einem Zellstapel und dem Zellgehäuse auszubilden. Der mindestens eine Abstandshalter kann beispielsweise in Form einer Materialverdickung bzw. Materialverbreiterung ausgestaltet sein. Je nach Ausgestaltung kann der Abstandshalter Stege aufweisen, die gegen zumindest einen Zellstapel anlehnen können. Eine derartig ausgebildete Puffereinheit kann die mögliche Bewegungsfreiheit von Zellstapeln zuverlässig minimieren.

Je nach Ausgestaltung kann die Puffereinheit die Zellstapel nicht nur beabstanden, sondern auch mechanisch miteinander koppeln, um eine Montage der Batteriezelle zu erleichtern. Hierzu kann die Puffereinheit mit den Zellstapeln gekoppelt und als Ganzes in das Zellgehäuse hineingesetzt werden.

Nach einer weiteren Ausführungsform weist der mindestens eine Abstandshalter einen Quersteg auf, welcher als ein mechanischer Anschlag für den mindestens einen Zellstapel dient. Insbesondere kann der Quersteg quer zu einer Höhenrichtung bzw. entlang der Breitenrichtung abstehen und mindestens einen Zellstapel abstützen. Diese Maßnahme ermöglicht ein technisch einfaches Freihalten von Bereichen innerhalb des Zellgehäuses. Beispielsweise kann hierdurch ein Zugang zu einer Berstmembran oder ein Zugang zu Batteriepolen freigehalten werden.

Die Puffereinheit kann die Betriebssicherheit der Batteriezelle optimieren, wenn der mindestens eine Abstandshalter einen Kanal zum Leiten von Fluiden entlang mindestens einer Raumrichtung aufweist. Vorteilhafterweise ist der Kanal zwischen dem mindestens einem Quersteg und einem Abschnitt des Zellgehäuses ausgebildet. Hierdurch kann insbesondere ein kopfseitiger und/oder bodenseitiger Abschnitt im Innenvolumen des Zellgehäuses für das Leiten von gasförmigen Komponenten im Falle eines unkontrollierten Druckanstiegs im Innenvolumen des Zellgehäuses reserviert werden. Somit kann ein Blockieren von Berstmembranen durch unkontrolliert verschobene Zellstapel im Zellgehäuse vermieden werden.

Gemäß einem weiteren Ausführungsbeispiel weist die mindestens eine Puffereinheit endseitig gegenüber einer Höhenrichtung jeweils einen Abstandshalter auf. Somit kann die Puffereinheit auf beiden Seiten bzw. Endabschnitten entlang der Höhenrichtung jeweils einen Abstandshalter aufweisen. Diese Maßnahme ermöglicht die exakte Steuerung der Position der Zellstapel innerhalb des Zellgehäuses.

Vorteilhafterweise weist die Puffereinheit zwischen den Abstandshaltern einen Mittelsteg auf. Der Mittelsteg fungiert als Abstandshalter zwischen den Zellstapeln und kann bei einer Ausführungsform elastisch ausgestaltet sein. Der Mittelsteg und die Abstandshalter bilden zumindest einseitig des Mittelstegs einen Aufnahmeraum bzw. Aufnahmeabschnitt zum Aufnehmen und Positionieren von einem Zellstapel aus. Insbesondere kann zwischen dem Mittelsteg, zumindest einem Abstandshalter und einer Wand des Zellgehäuses ein Aufnahmeabschnitt zum ortsfesten Positionieren von mindestens einem Zellstapel geformt werden.

Bei einer symmetrischen Ausgestaltung der Puffereinheit können zu beiden Seiten des Mittelstegs Zellstapel ortsfest angeordnet werden.

Die Puffereinheit kann sich über eine gesamte Länge der Batteriezelle bzw. entlang einer Ausdehnung in Längenrichtung erstrecken.

Alternativ oder zusätzlich kann mindestens eine Puffereinheit der Batterieanordnung zumindest einen Teilbereich der gesamten Länge der Zellstapel im Zellgehäuse einnehmen. Dabei kann die Puffereinheit einteilig oder mehrteilig entlang der Längenrichtung geformt sein, um eine gleichmäßige Abstützung der Zellstapel zu ermöglichen.

Die mindestens eine Puffereinheit kann besonders vielseitig verwendet werden, wenn diese zumindest bereichsweise aus Polypropylen und/oder einem Vlies und/oder einem Schaum und/oder PVC hergestellt ist. Hierdurch kann die Puffereinheit resistent gegenüber Elektrolytlösungen ausgebildet werden. Weiterhin kann eine Puffereinheit mit einer porösen Struktur, wie beispielsweise in Form eines Schaums einen Teil der Elektrolytlösung aufnehmen bzw. absorbieren und somit die Füllmenge der Elektrolytlösung minimal beeinträchtigen.

Nach einer weiteren Ausführungsform ist die mindestens eine Puffereinheit zumindest bereichsweise formschlüssig und/oder stoffschlüssig mit dem Zellgehäuse verbindbar. Durch diese Maßnahme kann die mindestens eine Puffereinheit fest mit dem Zellgehäuse gekoppelt werden. Beispielsweise kann die Puffereinheit mit Hilfe von Klebestreifen oder eines Klebers mit dem Zellgehäuse verklebt werden. Eine formschlüssige Verbindung zwischen der Puffereinheit und dem Zellgehäuse kann mit Hilfe von Klick-Einrast-Verbindungen realisiert werden. Weiterhin kann eine Verbindung oder zumindest eine Positionierung der Puffereinheit mit Hilfe einer Feder-NutVerbindung umgesetzt werden. Eine weitere Möglichkeit, die Puffereinheit mit dem Zellgehäuse zu verbinden, besteht darin, Schraubverbindungen oder Nietverbindungen und/oder Schweißverbindungen einzusetzen.

Gemäß einem weiteren Aspekt der Erfindung wird eine Puffereinheit bereitgestellt, welche dazu eingerichtet ist, in einem Innenvolumen einer Batteriezelle eingesetzt zu werden. Die Puffereinheit weist mindestens einen Mittelsteg auf, welcher dazu konfiguriert ist, zumindest zwei Zellstapel voneinander zu beabstanden bzw. zwischen zwei Zellstapeln angeordnet zu sein. Weiterhin weist die Puffereinheit mindestens einen Abstandshalter zum zumindest bereichsweisen Arretieren von mindestens einem Zellstapel auf. Insbesondere kann die Puffereinheit dazu eingerichtet sein, in einer erfindungsgemäßen Batterieanordnung verwendet zu werden.

Nach einem weiteren Aspekt der Erfindung wird eine Batteriezelle bereitgestellt. Die Batteriezelle weist ein Zellgehäuse mit mindestens zwei Zellstapeln auf, welche durch eine erfindungsgemäße Puffereinheit voneinander beabstandet sind.

Nachstehend werden mehrere Ausführungsbeispiele der Erfindung anhand der Zeichnungen näher erläutert. Es zeigen:
Fig. 1 eine Schnittdarstellung einer Batteriezelle gemäß einer ersten Ausführungsform der Erfindung,
Fig. 2 eine Schnittdarstellung einer Batteriezelle gemäß einer zweiten Ausführungsform der Erfindung,
Fig. 3 eine Schnittdarstellung einer Batteriezelle gemäß einer dritten Ausführungsform der Erfindung, und
Fig. 4 eine Schnittdarstellung einer Batteriezelle gemäß einer vierten Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

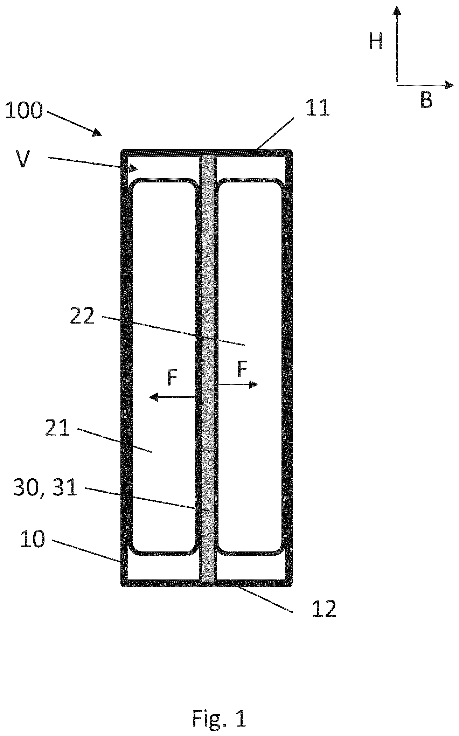

Die Fig. 1 zeigt eine Schnittdarstellung einer Batteriezelle 100 gemäß einer ersten Ausführungsform der Erfindung. Hierbei ist der Aufbau der Batteriezelle 100 entlang einer Höhenrichtung H und einer Breitenrichtung B veranschaulicht.

Insbesondere wird eine nicht bezifferte Batterieanordnung veranschaulicht, die ein Zellgehäuse 10 der Batteriezelle 100, mindestens zwei Zellstapel 21, 22 der Batteriezelle 100 und mindestens eine Puffereinheit 30 aufweist.

Der Übersicht halber sind Zellverbinder, Batteriepole und weitere Komponenten, wie beispielsweise Berstmembran, Beschichtungen des Zellgehäuses und der Schichtaufbau der Zellstapel 21, 22, nicht näher beschrieben und illustriert.

Das Zellgehäuse 10 ist beispielhaft als ein Gehäuse einer prismatischen Batteriezelle 100 ausgestaltet und kann aus einer Aluminiumlegierung bestehen. Zelldeckel, die das Zellgehäuse 10 verschließen sind der Übersicht halber nicht dargestellt. In einem Innenvolumen V des Zellgehäuses 10 sind im dargestellten Ausführungsbeispiel zwei Zellstapel 21, 22 angeordnet. Die Zellstapel 21, 22 können beispielsweise aus einer Vielzahl von Anodenschichten, Kathodenschichten und Separatorschichten bestehen, die aufgerollt oder gestapelt angeordnet sind und dazu eingerichtet sind, eine Batteriezelle 100 basierend auf einer Lithium-Ionen-Technologie auszubilden.

Die Zellstapel 21, 22 sind entlang der Breitenrichtung B aneinander gereiht. Weiterhin ist das Innenvolumen V mit einer Elektrolytlösung zumindest teilweise gefüllt.

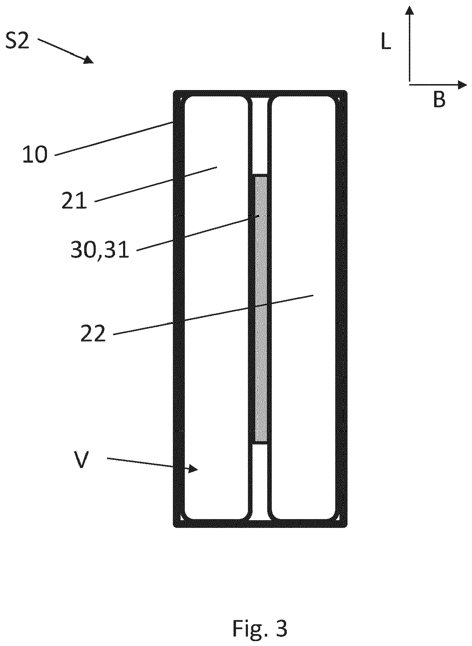

Die Puffereinheit 30 ist ebenfalls im Innenvolumen V des Zellgehäuses 10 angeordnet. Die Zellstapel 21, 22 sind durch die Puffereinheit 30 voneinander beabstandet. Hierbei erstreckt sich die Puffereinheit 30 entlang einer Höhenrichtung H und einer Längenrichtung L (s. Fig. 3) und bildet eine Grenze zwischen den Zellstapeln 21, 22 aus.

Die Puffereinheit 30 besitzt hierbei eine Steifigkeit bzw. mechanische Stabilität auf und stützt sich entlang der Höhenrichtung H zwischen einer kopfseitigen Wandung 11 und einer bodenseitigen Wandung 12 des Zellgehäuses 10 ab.

Im dargestellten Ausführungsbeispiel ist die Puffereinheit 30 als eine Matte bzw. ein Mittelteil 31 gebildet und weist elastische Materialeigenschaften auf. Insbesondere ist die Puffereinheit 30 im Zellgehäuse 10 verpresst und übt eine Federkraft F auf beide Zellstapel 21, 22 aus, um diese ortsfest im Innenvolumen V zu arretieren.

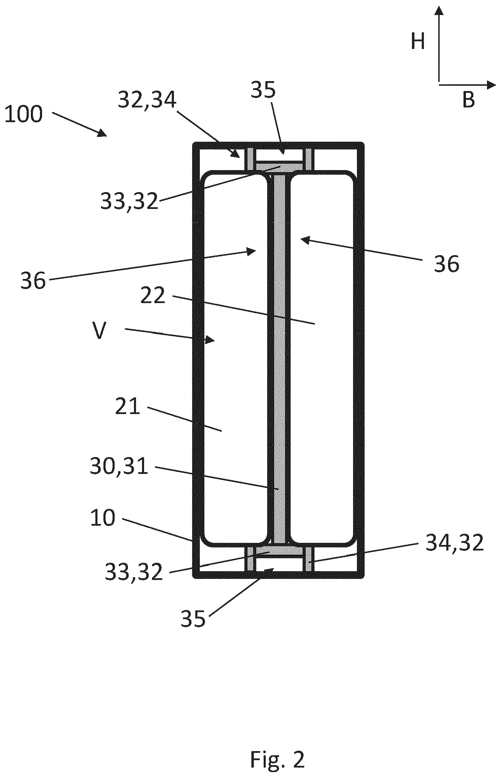

In der Fig. 2 ist eine weitere Schnittdarstellung einer Batteriezelle 100 gemäß einer zweiten Ausführungsform der Erfindung gezeigt. Im Unterschied zum ersten Ausführungsbeispiel, weist die mindestens eine Puffereinheit 30 endseitig relativ zur Höhenrichtung H jeweils einen Abstandshalter 32 auf. Somit weist die Puffereinheit 30 auf beiden Seiten bzw. Endabschnitten entlang der Höhenrichtung H jeweils einen Abstandshalter 32 auf.

Zwischen den Abstandshaltern 20 ist der Mittelsteg 31 ausgebildet. Der Mittelsteg 31 fungiert als Abstandshalter zwischen den Zellstapeln 21, 22 und beispielsweise elastisch oder starr ausgestaltet sein.

Die Abstandshalter 32 weisen Querstege 33 auf, welche in Breitenrichtung B von dem Mittelsteg 31 abstehen. Zum Ausfüllen der gesamten Ausdehnung des Innenvolumens V entlang der Höhenrichtung H sind die Querstege 33 mit Endabschnitten 34 bzw. Endanschlägen 34 versehen.

Die Querstege 33 bilden Vorsprünge, durch welche die Zellstapel 21, 22 bereichsweise abgestützt werden, um eine Veränderung ihrer Position innerhalb des Innenvolumens V des Zellgehäuses zu unterbinden oder zu begrenzen. Ein Aufbringen einer Federkraft F durch den Mittelsteg 31 ist bei dieser Ausführungsform optional, da die Endabschnitte 32 die Zellstapel 21, 22 in ihrer Position arretieren können und ein Ausgleich einer Volumenzunahme der Zellstapel 21, 22 durch Abstände zum Mittelsteg 31 der Puffereinheit 30 bzw. zu dem Zellgehäuse 10 möglich ist.

Bei einer Ausführungsform kann der Mittelsteg 31 elastisch ausgestaltet sein und die Zellstapel 21, 22 federnd entlang der Breitenrichtung B auseinander gegen die Wandungen des Zellgehäuses 10 drücken.

Kanäle 35 zum Leiten von Fluiden, insbesondere in Form von gasförmigen Bestandteilen der Elektrolytlösung, werden zwischen den Endanschlägen 34, den Querstegen 33 und den Wandungen 11, 12 des Zellgehäuses 10 ausgebildet. Die Kanäle 35 erstrecken sich im dargestellten Ausführungsbeispiel entlang der Längenrichtung L.

Der Mittelsteg 31 und die Abstandshalter 32 sind im dargestellten Ausführungsbeispiel symmetrisch geformt und bilden beidseitig des Mittelstegs 31 Aufnahmeräume bzw. Aufnahmeabschnitte 36 zum Aufnehmen und Positionieren der Zellstapel 21, 22 aus.

Die Aufnahmeabschnitte 36 können die Zellstapel 21, 22 formschlüssig entlang der Höhenrichtung H abstützen und somit eine Bewegung der Zellstapel 21, 22 entlang der Höhenrichtung H verhindern.

Die Abstandshalter 32 und der Mittelsteg 31 der Puffereinheit 30 können einteilig ausgeführt sein. Beispielsweise kann eine derartige Puffereinheit 30 als ein Spritzguss-Bauteil ausgestaltet sein.

Die Fig. 3 zeigt eine weitere Schnittdarstellung einer Batteriezelle 100 gemäß einer dritten Ausführungsform der Erfindung. Die Schnittdarstellung Verdeutlicht die Ausdehnung der Batteriezelle 100 und der Puffereinheit 30 entlang der Längenrichtung L. Beispielhaft ist hier eine Puffereinheit 30 entsprechend dem ersten Ausführungsbeispiel aus Fig. 1 gezeigt.

Im ersten Ausführungsbeispiel weist die Puffereinheit 30 eine Ausdehnung entlang der Längenrichtung L auf, welche einer Ausdehnung der Zellstapel 21, 22 entlang der Längenrichtung L entspricht. Im Unterschied hierzu erstreckt sich die Puffereinheit 30 im dritten Ausführungsbeispiel nicht vollständig entlang der Längenrichtung L. Beispielhaft nimmt die Puffereinheit 30 einen Teilbereich entlang der Längenrichtung L zwischen den Zellstapeln 21, 22 ein und ist einteilig ausgeführt.

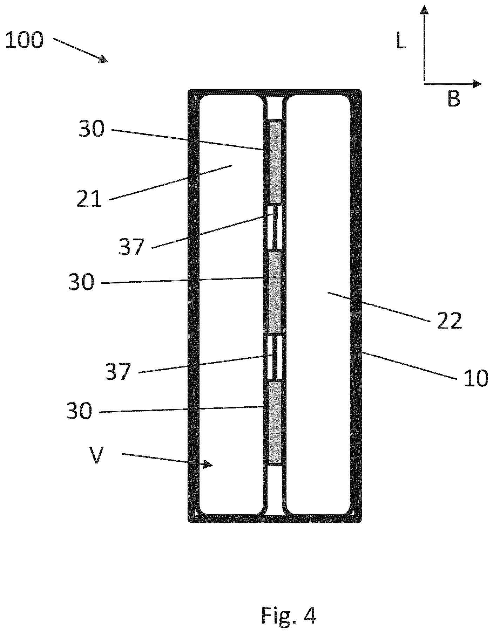

Analog hierzu ist in der Fig. 4 eine Batteriezelle 100 entsprechend einer vierten Ausführungsform der Erfindung gezeigt, bei welcher die Puffereinheit 30 mehrteilig ausgeführt ist und entlang der Längenrichtung L zwischen den Zellstapeln 21, 22 verteilt angeordnet ist. Die jeweiligen Teile der Puffereinheit 30 können miteinander gekoppelt sein oder voneinander getrennt sein.

Eine mehrteilige Ausgestaltung der Puffereinheit 30 kann zur Gewichtseinsparung vorteilhaft eingesetzt werden.

Die jeweiligen Teile der Puffereinheit 30 können beispielsweise durch Verbindungsstege 37 miteinander verbunden sein. Alternativ können Mittelstege 31 oder Abstandshalter 32 zum Verbinden der jeweiligen Teile der Puffereinheit 30 dienen.

## Patentansprüche

1. Batterieanordnung, aufweisend ein Zellgehäuse (10) einer Batteriezelle (100), aufweisend mindestens zwei Zellstapel (21, 22), welche in dem Zellgehäuse (10) angeordnet sind, und aufweisend mindestens eine Puffereinheit (30), wobei mindestens zwei Zellstapel (21, 22) durch die Puffereinheit (30) voneinander beabstandet sind.

2. Batterieanordnung nach Anspruch 1, wobei die mindestens eine Puffereinheit (30) zumindest entlang einer Breitenrichtung (B) der Batteriezelle (100) zumindest bereichsweise komprimierbar ausgestaltet ist.

3. Batterieanordnung nach Anspruch 1 oder 2, wobei die mindestens eine Puffereinheit (30) elastisch, insbesondere elastisch federnd, zwischen den mindestens zwei Zellstapeln (21, 22) verpresst angeordnet ist.

4. Batterieanordnung nach einem der Ansprüche 1 bis 3, wobei die mindestens eine Puffereinheit (30) mindestens einen randseitigen Abstandshalter (32) aufweist, welcher dazu eingerichtet ist, einen Abstand entlang mindestens einer Raumrichtung (H, B, L), insbesondere einer Höhenrichtung (H), zwischen mindestens einem Zellstapel (21, 22) und dem Zellgehäuse (10) auszubilden.

5. Batterieanordnung nach Anspruch 4, wobei der mindestens eine Abstandshalter (32) einen Quersteg (33) aufweist, welcher als ein mechanischer Anschlag für den mindestens einen Zellstapel (21, 22) dient.

6. Batterieanordnung nach Anspruch 5, wobei der mindestens eine Abstandshalter (32) einen Kanal (35) zum Leiten von Fluiden entlang mindestens einer Raumrichtung (H, B, L) aufweist, wobei der Kanal (35) zwischen dem mindestens einen Quersteg (33) und einem Abschnitt (11, 12) des Zellgehäuses (10) ausgebildet ist.

7. Batterieanordnung nach einem der Ansprüche 4 bis 6, wobei die mindestens eine Puffereinheit (30) endseitig gegenüber einer Höhenrichtung (H) jeweils einen Abstandshalter (32) aufweist, wobei die Puffereinheit (30) einen Mittelsteg (31) zwischen den Abstandshaltern (32) aufweist, welcher elastisch oder starr ausgestaltet ist, wobei zumindest einseitig des Mittelstegs (31) ein Aufnahmeraum (36) zum Aufnehmen und Positionieren von einem Zellstapel (21, 22) durch die Abstandshalter (32) und/oder den Mittelsteg (31) ausgebildet ist.

8. Batterieanordnung nach einem der Ansprüche 1 bis 7, wobei die mindestens eine Puffereinheit (30) zumindest bereichsweise aus Polypropylen und/oder einem Vlies und/oder einem Schaum und/oder PVC hergestellt ist.

9. Batterieanordnung nach einem der Ansprüche 1 bis 8, wobei die mindestens eine Puffereinheit (30) zumindest bereichsweise formschlüssig und/oder stoffschlüssig mit dem Zellgehäuse (10) verbindbar ist.

10. Puffereinheit (30), welche dazu eingerichtet ist, in einem Innenvolumen (V) einer Batteriezelle (100) eingesetzt zu sein, aufweisend mindestens einen Mittelsteg (31), welcher dazu konfiguriert ist, zumindest zwei Zellstapel (21, 22) voneinander zu beabstanden, und aufweisend mindestens einen Abstandshalter (32) zum zumindest bereichsweisen Arretieren von mindestens einem Zellstapel (21, 22).

11. Batteriezelle (100), aufweisend ein Zellgehäuse (10) mit mindestens zwei Zellstapeln (21, 22), welche durch eine Puffereinheit (30) gemäß Anspruch 10 voneinander beabstandet sind.
